**Europäisches Patentamt**

(19) **European Patent Office**

**Office européen des brevets**

(11) Publication number : **0 384 121 B1**

# (12) EUROPEAN PATENT SPECIFICATION

(45) Date of publication of patent specification :
**30.09.92 Bulletin 92/40**

(51) Int. Cl.⁵ : **A24C 5/60,** B23K 26/06

(21) Application number : **90101040.5**

(22) Date of filing : **19.01.90**

(54) **Method and apparatus for perforating cigarettes, or the like, by means of laser rays.**

(30) Priority : **24.02.89 IT 1243389**

(43) Date of publication of application :
**29.08.90 Bulletin 90/35**

(45) Publication of the grant of the patent :
**30.09.92 Bulletin 92/40**

(84) Designated Contracting States :
**DE FR GB**

(56) References cited :
**FR-A- 2 394 256**
**PATENT ABSTRACTS OF JAPAN vol. 10, no. 267 (M-516)(2323) 11 September 1986, & JP-A-61 92793 (TOSHIBA CORP) 10 May 1986,**

(73) Proprietor : **SASIB S.p.A.**
**Via di Corticella, 87/89**
**I-40128 Bologna (IT)**

(72) Inventor : **Cerri, Walter**
**Corso Porta Romana 115**
**I-20122 Milano (IT)**
Inventor : **Garifo, Luciano**
**Via Ajaccio 13**
**I-20133 Milano (IT)**
Inventor : **Scagliarini, Agostino**
**Via Cimitero Vecchio 18**
**I-40010 S.Giovanni in Persiceto (IT)**

(74) Representative : **Porsia, Bruno et al**
**c/o Succ. Ing. Fischetti & Weber Via Caffaro 3/2**
**I-16124 Genova (IT)**

## Description

The invention relates to ventilated cigarettes making machines, and more precisely to is a method of perforating cigarettes similar rod- articles. According to this method, a filter plug and cigarettes unit consisting of a double-length filter plug set between two single-length cigarettes and connected thereto by enwrapping and glueing with a covering junction band, is provided at each filter plug end associated with the respective cigarette, with at least one row of holes which is directed transversely to the axis of the filter plug and cigarettes unit, and which is made in the said covering band by the perforating action of two laser rays obtained by parting a pulsating, primary, single laser ray into two secondary laser rays of an equal power, and by causing the filter plug and cigarettes unit to turn around its axis, provisions being made for a final checking of the cigarettes ventilation degree of the cigarettes which according to the difference in the measured value of the average ventilation degree of a predetermined number of cigarettes relative to a reference value of the cigarettes ventilation degree, affects the frequency and the power of the pulsating primary laser ray. This method is for example disclosed in FR.A.2394256.

In these known methods of perforating cigarettes, the pulsating primary laser ray is parted by means of optical systems into two components of an equal intensity. During the operation of the ventilated cigarettes making machine, the optical systems are liable to often become soiled, particularly owing to dust which deposits thereon and produces an unbalance in the power apportionment of the primary laser ray to the two secondary laser rays. Because of this power unbalance between the two secondary laser rays, the perforating effect of the said two rays is different, so that the cigarettes having been perforated by one of the two secondary laser rays have a degree of ventilation which differs from that of the cigarettes having been perforated by the other secondary laser ray. In this case, thanks to the final checking of the cigarettes ventilation degree, it is presently possible to affect only the frequency and the intensity of the primary laser ray, so as to cause the average ventilation degree of the produced cigarettes to be kept, within certain tolerance limits, constant and equal to a reference value. Such a checking, however, does not keep into account the possible difference in the ventilation degree between the cigarettes having been perforated by one of the two secondary laser rays and the cigarettes having been perforated by the other secondary laser ray, and therefore this checking is not sufficient for guaranteeing matching degrees of ventilation of the cigarettes belonging to the same unit consisting of a filter plug and the two simultaneously perforated cigarettes, nor for promoting any actions that are apt to eliminate the said difference. Therefore, in order to restore just the same perforating action by the secondary laser rays obtained from the partition of the primary laser ray, the optical systems in the perforating apparatus must be presently cleaned and, for this purpose, the cigarette making machine needs to be stopped, which results in a considerable output loss.

The invention also relates to an apparatus for carrying out the above-disclosed method, and comprising a laser source for generating only one pulsating, primary, single laser ray, a first transmitting reflecting mirror for parting the primary laser ray into two secondary laser rays of a same power, i.e. into a secondary laser ray passing through the said first mirror, and into a secondary laser ray which is reflected towards one of the ends of the filter plug which is associated with a cigarette, a second solely reflecting mirror from which the secondary laser ray passing through the said first transmitting reflecting mirror will be deviated as a reflected secondary laser ray towards the filter plug end which is associated with the opposite cigarette, a focusing lens for each of the reflected secondary laser rays, for concentrating the said rays on the respective surface of the covering junction band, a device for checking the ventilation degree of the cigarettes and controlling the laser source for generating the pulsating primary laser ray. Such an apparatus is for instance also disclosed in FR.A.2394256

As disclosed above, in the known machines of this type the power unbalance of the two reflected secondary laser rays is produced by the presence of dust on the transmitting reflecting mirror and on the solely reflecting mirror. In this case, the effect of dust on the mirrors, and then the power unbalance of the two reflected secondary laser rays is greater for the secondary laser ray which firstly passes through the transmitting reflecting mirror, and is nextly reflected by the solely reflecting mirror. The solely reflecting mirror actually receives a laser ray of a minor power than the precise half of the power of the primary laser ray, owing to the lesser transparency of the transmitting reflecting mirror, while the effect of dust on the reflection of both mirrors is substantially the same.

The invention aims to provide a method of perforating cigarettes of the type as described in the preamble of claim 1 and an apparatus as described in the preamble of claim 6, whereby the aforementioned drawbacks can be obviated in a simple and economical manner, and cigarettes having just the same degree of ventilation can be simultaneously obtained by means of each laser ray.

This object is attained by the invention with a method of the type as described in the preamble of claim 1, in which in the final step of checking the ventilation degree of the cigarettes, the average ventilation degree is measured of a given number of cigarettes having been perforated by one of the two secondary laser rays, and the average ventilation degree is measured of the cigarettes having been simultaneously perforated by the other secondary laser ray, and such a balancing of the perforating action by the two secondary laser rays is effected that with each secondary laser ray identical overall areas of ventilation holes are obtained either according to the difference between the measured value of the average ventilation degree of the cigarettes having been perforated by one of the two secondary laser rays and the measured value of the average ventilation degree of the cigarettes having been perforated by the other secondary laser ray, or according to the difference between a reference value of the cigarettes ventilation degree and the measured value of the average ventilation degree of the cigarettes having been perforated by one of the two secondary laser rays, and to the difference between the said reference value and the measured value of the average ventilation degree of the cigarettes having been perforated by the other secondary laser ray.

According to a first method of the invention, the invention proposes to achieve the balancing of the secondary laser rays perforating action by balancing the power apportionment of the pulsating primary laser ray to the two secondary laser rays.

According to a modified method of the invention, the balancing of the two secondary rays perforating action is carried out by causing at least one of the two secondary laser rays to be concentrated to a different degree on the respective surface of the covering band, so that holes of a different diameter are thus made.

To carry out this method, i.e. in order to balance the power apportionment of the primary laser ray to the two secondary laser rays, the invention provides an apparatus of the type as described in the preamble of claim 6, in that in order to balance the power apportionment of the primary laser ray of the two secondary laser rays, means are provided for varying the coefficient of reflection transmission from and by the transmitting reflecting mirror, and the said means are controlled by the device for checking the ventilation degree of the cigarettes.

In a modified embodiment, in order to achieve a different concentration of the two secondary laser rays which are reflected on the respective zone of the covering band, so that holes of a different diameter will be made in the covering band, and to obtain identical overall areas of ventilation holes in each one of the two cigarettes of a filter plug and cigarettes unit, the invention provides an apparatus of the type as described in the preamble of claim 6, which is provided with means for varying the concentration of at least one of the reflected secondary laser rays, so that a variation is obtained in the diameter of the focal spot made by the reflected secondary laser ray associated with a lens, on the respective zone of the covering band, the said means being controlled by the device for checking the ventilation degree of the cigarettes.

Thanks to these embodiments of the method according to the invention and of the apparatus for carrying out the said method, the cigarette ventilation degree of each pair cigarettes in a unit consisting of a filter plug and two cigarettes which are simultaneously perforated by the secondary laser rays, is always maintained at a same value in an automatic manner and without the aid of further checking means, other than those already provided in the known devices. Therefore, the invention not only affords important advantages as for what concerns the construction of the apparatus and the cost of the said technical provisions, but also avoids any stopping of the ventilated cigarettes making machine, so that a considerable decrease in productivity is obviated.

Additional features which further improve the said method and the said apparatus also form the object of the invention, and are the subject of the other dependant Claims.

The particular features of the invention and the advantages arising therefrom will appear in more detail from the specification of some preferred embodiments, which are shown by way of non-limiting examples in the accompanying drawings, in which:

Figure 1 diagrammatically shows embodiment of the apparatus for perforating cigarettes by means of laser rays, according to the invention.

Figure 2 shows the transmitting reflecting mirror used in the embodiment according to Figure 1.

Figure 3 diagrammatically shows a second embodiment of the apparatus according to the invention.

Figure 4 shows a modified realization of the embodiment according to Figure 3.

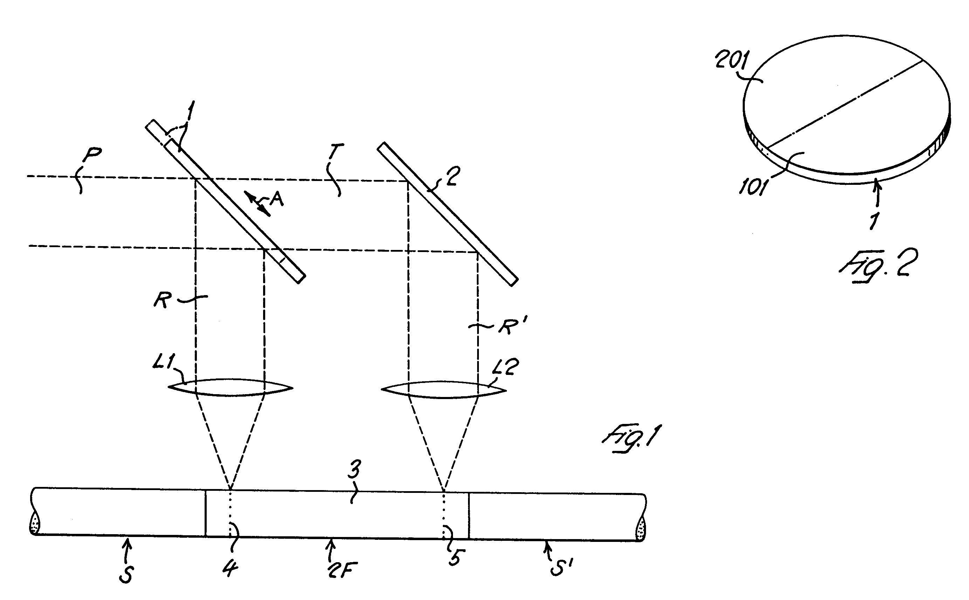

Referring to Figure 1, there is shown a first embodiment of an apparatus according to the invention for perforating cigarettes by means of laser rays, in which two filterless cigarettes S and S′ connected to each other in a filter plug and cigarettes unit S+2F+S′ by the interposition of a double-length filter plug 2F which is joined to the said cigarettes by enwrapping and glueing on the said filter plug a covering junction band 3, are provided in the said covering band 3 with a row of holes 4, 5 which are directed transversely to the axis of the filter plug and cigarettes unit S+2F+S′, and are made at each end of the filter plug 2F which is associated to a respective cigarette S, S′.

The apparatus according to the invention comprises a transmitting reflecting mirror 1 and a solely reflecting mirror 2 which are arranged parallel to each other and in such a spaced apart relation that substantially corresponds to the distance between the rows of holes 4, 5. Both mirrors are so inclined relative to the axis of the filter plug and cigarettes unit S+2F+S′ that the said mirrors will reflect a ray falling upon the desired zone of the filter plug 2F, that is, upon the band 3. Moreover, between each mirror 1, 2 and the filter plug and cigarettes unit S+2F+S′, a lens L1, L2 is provided for concentrating further the reflected secondary laser rays R and R′ on the surface of band 3.

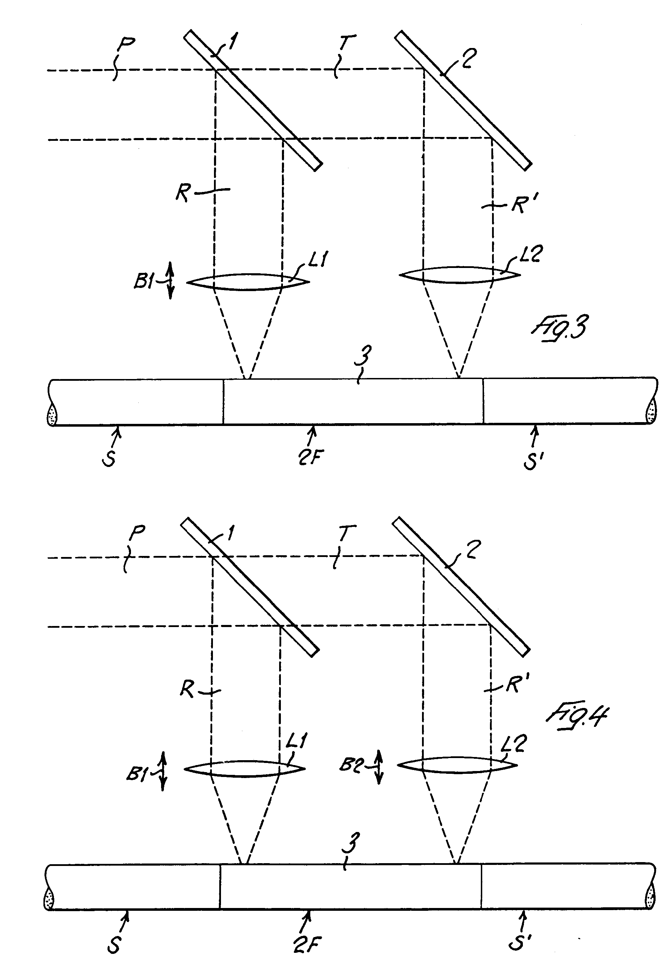

As it clearly appears from Figure 2, the reflecting surface of the transmitting reflecting mirror 1 is divided into two zones 101 and 201 respectively extending over about one-half of the said surface and having different coefficients of reflection, which particularly amount 40% and 60% of the incident laser ray. The trasmitting reflecting mirror 1 is so mounted in the apparatus shown in Figure 1 as to be shiftable transversely to a primary laser ray P and transversely to the line separating the two zones 101 and 202 with two different coefficients of reflection. This transmitting reflecting mirror 1 can be shifted as indicated by arrow A, in both senses of said arrow A, by the aid means (not shown) for shifting the said mirror 1.

This apparatus is further provided with a not-shown laser source for generating a pulsating primary laser ray P and with a device for checking the degree of ventilation of the simultaneously perforated cigarettes S+F and S′+F, also not shown.

The pulsating primary laser ray P falling upon the first transmitting reflecting mirror 1 is initially parted into two secondary laser rays, i.e., into a reflected secondary laser ray R and into a secondary laser ray T which passes through the said first transmitting reflecting mirror 1, and which as a reflected secondary laser ray R′, will be reflected by the solely reflecting mirror 2 in the direction of the associated zone of the filter plug and cigarettes unit S+2F+S′. The two reflected secondary laser rays R and R′ are further concentrated on the respective zone of the covering band 3 of a filter plug and cigarettes unit S+2F+S′ by the lenses L1 and L2, and the said unit is being simultaneously turned around its axis, so that in each zone of band 3 which is struck by the reflected secondary laser rays R and R′, a row of holes 4, 5 is made transversely to the axis of the filter plug and cigarettes unit S+2F+S′.

Once they have been perforated, the cigarettes S+F and S′+F still forming a single filter plug and cigarettes unit S+2F+S′ are separated from each other and are individually fed to the device for checking their degree of ventilation. This device (not shown) measures the average ventilation degree of a given number of cigarettes S+F having been perforated by the reflected secondary laser ray R, as well as the average ventilation degree of an equal number of cigarettes S′+F having been perforated by the reflected secondary laser ray R′, and then makes up the difference between the said two measured values, and also compares each of the said measured values with a reference value of the average ventilation degree of the cigarettes, which is set in the said device.

Under normal operative conditions, i.e., when any dust, or the like, has not yet deposited on the mirrors 1 and 2, the power of the primary laser ray P is apportioned substantially in a same manner to the two secondary laser rays R, and T or R′, and the average ventilation degree of the cigarette S+F having been perforated by the reflected secondary laser ray R is approximately equal to that of the cigarettes S′+F having been perforated by the reflected secondary laser ray R′.

In this case, the difference between the average ventilation degree of the cigarettes S+F having been perforated by the reflected secondary laser ray R and the average ventilation degree of the cigarettes S′+F having been perforated by the reflected secondary laser ray R′ is equal to zero, or almost to zero, or anyway it is lower than a predetermined threshold value which has been present in the checking device. This device then uses the value resulting from this difference for controlling the means provided for the shiftment of the transmitting reflecting mirror 1, which move the mirror 1 into such a position that one half of the primary laser ray P will fall upon the reflecting zone 101 having a 40% reflection coefficient, while the other half of the said ray P will fall upon the reflecting zone 201 having a 60% reflection coefficient, so that the said device gives rise to a partition of the said primary ray P into two secondary rays R and T which both have a power amounting to 50% of the power of the primary laser ray P.

Moreover, when the average ventilation degree of the cigarettes S+F and S′+F does not correspond, within certain tolerance limits, to the average reference value also set in the checking device, the checking device will so control the laser source for generating the primary laser ray P that the frequency and/or the power of the said primary laser ray P will be varied so as to obtain an output of ventilated cigarettes having a uniform degree of ventilation.

With the above disclosed conditions of the transmitting reflecting mirror 1, when the mirrors are soiled, for example by dust having deposited thereon, the reflected secondary laser ray R′ has a considerably lower power than the power of the reflected secondary laser ray R, since the ray R′ must pass through the transmitting reflecting mirror 1 and must be also reflected by the solely reflecting mirror 2, while the reflected secondary ray R undergoes a decrease in its intensity only at the transmitting reflecting mirror 1. Under these conditions, the difference between the average ventilation degree of the cigarettes S+F having been perforated by the reflected secondary laser ray R and the average ventilation degree of the cigarettes having been perforated by the reflected secondary laser ray R′ is higher than zero or than a present determinate threshold value, so that the checking device so controls the shiftment of the transmitting reflecting mirror 1 as to balance the power apportionment of the primary laser ray P to the two secondary laser rays R and R′, and as to have approximately equal ventilation degrees of the cigarettes S+F and S'+F. The transmitting reflecting mirror 1 is so shifted transversely to the line separating the two zones 101 and 201 having different reflection coefficients, that the distribution of the primary laser ray P to the two zones 101 and 201 of the transmitting reflecting mirror 1 will be varied, whereby, according to whether the primary laser ray P falls to a greater extent upon the one zone 101 or upon the other zone 201, a decrease or an increase in the power of the reflected secondary ray R occurs, which results in the power of the secondary laser ray T which passes through the transmitting reflecting mirror 1, being increased or decreased.

In order to have a quite equal ventilation degree for all the ventilated cigarettes being produced, as specified hereinabove, the device for checking the cigarette ventilation degree also controls, when required, the frequency and/or power variation of the primary laser ray P, according to the difference in the average ventilation degree between the ventilated cigarettes S+F and S'+F, relative to a set reference value of the ventilation degree of the cigarettes.

The embodiment shown in Figure 3 is essentially like the embodiment shown in Figure 1, and substantially comprises the same components which are designated by the same reference numerals. However, in the embodiment shown in Figure 3, the trasmitting reflecting mirror 1 is so mounted as to be stationary, and has a uniform coefficient of reflection over its entire reflecting surface, while the lens L1 for concentrating the secondary laser ray R being reflected by the transmitting reflecting mirror 1, is so mounted as to be shiftable in both senses of the direction of the said reflected secondary laser ray R, as indicated by arrow B1 in Figure 3.

Thanks to this devised arrangement, by shifting the lens L1 in either of the two senses of arrow B1, the secondary laser ray R can be more or less concentrated on the surface of band 3, whereby in the surface of this band 3 holes can be made which are larger or smaller than the holes made by the secondary laser ray R' with its lens L2 being fixedly mounted, so that the said ray R' has always a same degree of concentration on the surface of the said band 3. Therefore, when the mirrors 1 and 2 are covered with dust, so that the reflected secondary laser rays R and R' no more have a same power and the average ventilation degree of the perforated cigarettes S+F is no more substantially equal to the average ventilation degree of the cigarettes S'+F, the perforating action by the two secondary laser rays R and R' can be re-balanced by only shifting the lens L1. Also in this case, the shifting of the lens L1 is controlled according to the difference, as measured by the checking device, between the average ventilation degree of the cigarettes S+F having been perforated by the reflected secondary laser ray R and the average ventilation degree of the cigarettes S'+F having been perforated by the reflected secondary laser ray R', whereby this difference is eliminated or minimized, in a manner which is quite similar to the preceding embodiment.

From the foregoing description there clearly appear the advantages of the method and the apparatus according to the invention. The advantages of this method reside in the fact that the ventilation degree of the produced cigarettes can be rendered uniform, not only in the case of a variation in time of the cigarettes ventilation degree, but also in the case of a differnece in the ventilation degree between the cigarettes which are simultaneously obtained from a same filter plug and cigarettes unit. In both of these cases, this is achieved respectively by causing the frequency and the power of the primary laser ray to be properly adjusted, and by causing the perforating action by the reflected secondary laser rays, particularly the power apportionment of the primary laser ray to the secondary laser rays obtained from the said primary laser ray, to be balanced.

The advantages of the above disclosed apparatus for carrying out the method according to the invention reside in the extremely simple and economical construction of the said apparatus, and in the fact to be also taken into account, that such an apparatus can be realized even by augmenting and modifying without having to bear an excessive cost of construction, any perforating apparatus of the known ventilated cigarette-making machines.

A further improvement of the apparatus according to the invention, as shown in Figure 3, is the modified embodiment shown in Figure 4. In this modified embodiment, not only the lens L1, but also the lens L2 is so mounted as to be shiftable in the direction of the reflected secondary laser ray R' (arrow B2), so that both the perforating action by the secondary laser ray R and the perforating action by the secondary laser ray R' can be simultaneously varied.

Differently from the above disclosed embodiments, the shifting of the lens L1 and the shifting of the lens L2 is respectively controlled in an independent manner, and is based on the difference in the average ventilation degree between a predetermined number of the associated cigarettes S+F, S'+F, relative to a reference value of the said average ventilation degree which is set in the checking device. Thus, both the desired balancing of the perforating action by the reflected secondary laser rays R and R' and the variation as required for keeping constant the ventilation degree of the cigarettes while they are being produced, are simultaneously attained, however without the frequency and/or the power of the primary laser ray P having also to be controlled, just as in the above-disclosed embodiments.

## Claims

1. Method of perforating cigarettes similar rod- or like articles by means of laser rays, in which a filter plug and cigarettes unit (S+2F+S') consisting of a double-length filter plug (2F) set between two simple-length cigarettes (S, S') and connected thereto by enwrapping and glueing with a covering junction band (3), is provided at each end of the filter plug (2F) which is associated with the respective cigarette (S, S'), with at least one row of holes (4, 5) which is directed transversely to the axis of the filter plug and cigarettes unit (S+2F+S') and which is made in the said covering band (3) by the perforating action of two laser rays (R, R') obtained by parting a pulsating, primary, single laser ray (P) into two secondary laser rays (R, T) of an equal power, and by causing the filter plug and cigarettes unit (S+2F+S') to turn around its axis, provisions being made for a final checking of the ventilation degree of the cigarettes (S+F, S'+F) which according to the difference in the measured value between the average ventilation degree of a predetermined number of cigarettes (S+F, S'+F) relative to a reference value of the cigarettes ventilation degree, affects the frequency and the power of the pulsating primary laser ray (P) characterized in that in the final step of checking the ventilation degree of the cigarettes (S+F, S'+F), the average ventilation degree is measured of a given number of cigarettes (S+F) having been perforated by one (R) of the two secondary laser rays, and the average ventilation degree is measured of the cigarettes (S'+F) having been simultaneously perforated by the other secondary laser ray (R'), and such a balancing of the perforating action by the two secondary laser rays (R, R') is effected that with each secondary laser ray identical overall areas of ventilation holes are obtained either according to the difference between the measured value of the average ventilation degree of the cigarettes (S+F) having been perforated by one (R) of the two secondary laser rays and the measured value of the average ventilation degree of the cigarettes (S'+F) having been perforated by the other secondary laser ray (R'), or according to the difference between a reference value of the cigarettes ventilation degree and the measured value of the average ventilation degree of the cigarettes (S+F) having been perforated by one (R) of the two secondary laser rays, and to the difference between the said reference value and the measured value of the average ventilation degree of the cigarettes (S'+F) having been perforated by the other secondary laser ray (R').

2. The method according to Claim 1, characterized in that in order to achieve the balancing of the perforating action by the secondary laser rays (R, R'), the power apportionment is balanced of the pulsating primary laser ray (P) to the two secondary laser rays (R, R').

3. The method according to Claim 2, characterized in that the power apportionment of the primary laser ray (P) to the secondary laser rays (R, T) which are obtained from the partition of the primary laser ray (P) by means of a transmitting reflecting mirror (1), is balanced by varying the coefficient of reflection from the said transmitting reflecting mirror (1).

4. The method according to Claim 1, characterized in that the balancing of the perforating action by the two secondary laser rays (R, R') is carried out by causing the said secondary laser rays (R, R') to be concentrated to a different degree on the respective surface of the covering band (3), so that holes of a different diameter are thus made.

5. The method according to Claim 4, characterized in that the concentration of the secondary laser rays (R, R') on the respective zone of the covering band (3) is varied by shifting two focusing lenses (L1, L2) respectively associated with one of the two secondary laser rays (R, R'), or by shifting only one of the said two lenses, in both senses (arrow B1 and arrow B2) of the direction of the respective secondary laser ray (R, R').

6. An apparatus for carrying out the method according to Claims 1 to 3, and comprising a laser source for generating only one pulsating, primary, single laser ray (P), a first transmitting reflecting mirror (1) for parting the primary laser ray (P) into two secondary laser rays (R, T) of a same power, i.e., into a secondary laser ray (T) passing through the said first mirror, and into a secondary laser ray (R) which is reflected towards one of the ends of the filter plug (2F), which is associated with a cigarette (S), a second solely reflecting mirror (2) from which the secondary laser ray (T) passing through the said first transmitting reflecting mirror (1) will be deviated as a reflected secondary laser ray (R') towards the end of the filter plug (2F) which is associated with the opposite cigarette (S'), a focusing lens (L1, L2) for each of the reflected secondary laser rays (R, R'), for concentrating the said rays on the respective surface of the covering band (3), a device for checking the ventilation degree of the cigarettes (S+F, S'+F), and controlling the laser source for generating the pulsating primary laser ray (P), characterized in that in order to balance the power apportionment of the primary laser ray (P) to the two secondary laser rays (R, R'), means are provided for varying the coefficient of reflection transmission from and by the transmitting reflecting mirror (1), the said means being controlled by the device for checking the ventilation degree of the cigarettes (S+F, S'+F).

7. The apparatus according to Claim 6, characterized in that the surface of the transmitting reflecting mirror (1) is divided into two zones having different coefficients of reflection, each zone of the said surface being covered with a layer of reflecting material (101, 201) with a respective, different coefficient of reflection.

8. The apparatus according to Claim 7, characterized in that the one layer (101) and the other layer (201) of reflecting material have a coefficient of reflection respectively amounting to 40% and 60% of the incident ray, the two layers extending over about one-half of the surface of the transmitting reflecting mirror (1), and the line separating the said two layers being a straight line.

9. The apparatus according to Claim 8, characterized in that the pulsating primary laser ray is so directed that it falls partly upon the one reflecting zone (101) and partly upon the other reflecting zone (201) of the transmitting reflecting mirror (1), and in that means are provided for shifting the transmitting reflecting mirror (1) transversely to the line separating the two layers (101, 201) having a different coefficient of reflection, and transversely to the primary laser ray (P), the said means being so controlled by the device for checking the ventilation degree of the perforated cigarettes, that the part of the primary laser ray (P) which falls upon the one zone (101) of the transmitting reflecting mirror (1) will be varied relative to the part of the said primary laser ray (P) which falls upon the other zone (201) of the said mirror (1).

10. The apparatus according to claim 9, characterized in that the means for shifting the transmitting reflecting mirror consist of micrometrically shifting means.

11. The apparatus for carrying out the method according to Claims 1, 4, 5, and 6, characterized in that in order to cause the two reflected secondary laser rays (R, R') to be differently concentrated on the respective zone of the covering band (3), whereby holes of a different diameter are made in the said covering band, this apparatus is provided with means for shifting the lens (L1) for focalizing one (R) of the reflected secondary laser rays in both senses (arrow B1) of the direction of the said ray (R), so that a variation is obtained in the diameter of the focal spot made by the reflected secondary laser ray (R) on the respective zone of the covering band (3), tha said means for shifting the said lens (L1) being controlled by the device for checking the ventilation degree of the cigarettes.

12. The apparatus according to Claim 11, characterized in that each lens (L1, L2) for focalizing each reflected secondary laser ray (R, R') is provided with means for shifting one of the said lenses independently of the other lens in both senses (arrow B1 and arrow B2) of the direction of the reflected secondary laser ray (R, R') which is associated with the respective lens, the said means for shifting the said lenses being controlled independently of each other by the device for checking the ventilation degree of the cigarettes.

13. The apparatus according to any one or both of the preceding Claims 11 and 12, characterized in that the means for shifting the lenses (L1, L2) are micrometically shifting means.

14. The method and the apparatus according to any one of the preceding Claims, characterized in that this method and this apparatus may be used for perforating any other type of rod-like articles.

**Patentansprüche**

1. Verfahren zum Perforieren von Zigaretten oder ähnlichen stabförmigen Gegenständen mit Hilfe von Laserstrahlen, wobei eine Einheit aus Filterstopfen und Zigaretten (S + 2F + S'), die aus einem Filterstopfen (2F) doppelter Länge, der zwischen zwei Zigaretten (S, S') eingesetzt ist, besteht und der mit diesen verbunden ist durch Einwickeln und Verkleben eines Abdeckverbindungsbandes (3) bzw. Deckstreifens, an jedem Ende des Filterstopfens (2F), der zu der jeweiligen Zigarette (S, S') gehört, mit zumindest einer Reihe von Löchern (4, 5) versehen ist, die quer zu der Achse der Einheit aus Filterstopfen und Zigaretten (S + 2F + S') ausgerichtet ist, und welche in dem Abdeckband (3) durch eine Perforierung mit zwei Laserstrahlen (R, R') hergestellt ist, die man erhält durch Aufteilung eines pulsierenden, primären einzelnen Laserstrahls (P) in zwei Sekundärlaserstrahlen (R, T) gleicher Energie und dadurch, daß man veranlaßt, daß die Einheit aus Filterstopfen und Zigaretten (S + 2F + S') sich um ihre Achse dreht, wobei Vorkehrungen getroffen werden für eine abschließende Überprüfung des Grades der Belüftung der Zigaretten (S + F, S'+ F), welche entsprechend dem Unterschied des gemessenen Wertes zwischen dem durchschnittlichen Grad der Belüftung einer vorbestimmten Anzahl von Zigaretten (S + F, S′+ F) relativ zu einem Bezugswert des Grades der Belüftung der Zigaretten, die Frequenz und die Energie des pulsierenden primären Laserstrahls (P) beeinflußt, <u>dadurch gekennzeichnet,</u> daß in dem abschließenden Schritt der Überprüfung des Belüftungsgrades der Zigaretten (S + F, S′+ F) der durchschnittliche Belüftungsgrad von einer gegebenen Zahl von Zigaretten (S + F) gemessen wird, die durch einen (R) der zwei sekundären Laserstrahlen perforiert worden sind, und der durchschnittliche Belüftungsgrad der Zigaretten (S′+ F) gemessen wird, die gleichzeitig von dem anderen sekundären Laserstrahl (R′) perforiert worden sind, und daß ein solcher Ausgleich der Perforierwirkung durch die beiden sekundären Laserstrahlen (R, R′) bewirkt wird, so daß mit jedem sekundären Laserstrahl identische Gesamtquerschnitte der Belüftungslöcher erhalten werden entweder aufgrund der Differenz des gemessenen Wertes des durchschnittlichen Belüftungsgrades der Zigaretten (S + F), die von einem (R) der zwei sekundären Laserstrahlen und dem gemessenen Wert des durchschnittlichen Belüftungsgrades der Zigaretten (S′+ F), welche von dem anderen der sekundären Laserstrahlen (R′) perforiert worden sind, oder entsprechend der Differenz zwischen einem Bezugswert des Belüftungsgrades für die Zigaretten und dem gemessenen Wert des durchschnittlichen Belüftungsgrades der Zigaretten (S + F), welche von einem (R) der beiden sekundären Laserstrahlen perforiert wurden und der Differenz zwischen dem Bezugswert und dem gemessenen Wert des durchschnittlichen Belüftungsgrades der Zigaretten (S′+ F), welche von dem anderen sekundären Laserstrahl (R′) perforiert wurden.

2.  Verfahren nach Anspruch 1, dadurch gekennzeichnet, daß zum Erzielen des Ausgleichs der Perforierwirkung durch die sekundären Laserstrahlen (R, R′) die Energieaufteilung des pulsierenden primären Laserstrahls (P) auf die zwei sekundären Laserstrahlen (R, R′) ausgeglichen wird.

3.  Verfahren nach Anspruch 2, dadurch gekennzeichnet, daß die Energieaufteilung des primären Laserstrahls (P) auf die sekundären Laserstrahlen (R, T), die man durch Aufteilung des primären Laserstrahls (P) mit Hilfe eines durchlässigen, reflektierenden Spiegels (1) (halbdurchlässiger Spiegel) erhalt, durch Veränderung des Refkexionskoeffizienten des durchlässigen, reflektierenden Spiegels (1) ausgeglichen wird.

4.  Verfahren nach Anspruch 1, dadurch gekennzeichnet, daß das Ausgleichen der Perforierwirkung durch die zwei sekundären Laserstrahlen (R, R′) durchgeführt wird, indem man bewirkt, daß die sekundären Laserstrahlen (R, R′) in unterschiedlichem Maße auf die entsprechende Oberfläche des Deckbandes (3) konzentriert werden, so daß dadurch Löcher von unterschiedlichem Durchmesser hergestellt werden.

5.  Verfahren nach Anspruch 4, dadurch gekennzeichnet, daß die Konzentration der sekundären Laserstrahlen (R, R′) auf den jeweiligen Bereich des Abdeckbandes (3) verändert wird durch Verschieben zweier Fokussierlinsen (L1, L2), die jeweils zu einem der zwei sekundären Laserstrahlen (R, R′) gehören, oder durch Verschieben nur einer der beiden Linsen in beiden Richtungen (Pfeil B1 und Pfeil B2) des jeweiligen sekundären Laserstrahles (R, R′).

6.  Vorrichtung zum Durchführen des Verfahrens nach Anspruch 1 bis 3, welche eine Laserquelle zum Erzeugen nur eines pulsierenden, primären, einzelnen Laserstrahles (P), einen ersten durchlässigen, reflektierenden Spiegel (1), zum Aufteilen des primären Laserstrahles (P) in zwei sekundäre Laserstrahlen (R, T) derselben Energie, d.h. in einen sekundären Laserstrahl (T), der durch den ersten Spiegel hindurchtritt und in einen sekundären Laserstrahl (R), der in Richtung eines der Enden des Filterstopfens (2F) reflektiert wird, welcher zu einer Zigarette (S) gehört, einen zweiten ausschließlich reflektierenden Spiegel (2), von welchem der sekundäre Laserstrahl (T), der durch den ersten durchlässigen, reflektierenden Spiegel (1) hindurchtritt, als ein reflektierter sekundärer Laserstrahl (R′) in Richtung des Endes des Filterstopfens (2F) abgelenkt wird, der zu der gegenüberliegenden Zigarette (S′) gehört, eine Fokussierlinse (L1, L2) für jeden der reflektierten sekundären Laserstrahlen (R, R′), um die Strahlen auf die jeweilige Oberfläche des Abdeckbandes (3) zu konzentrieren, eine Einrichtung zum Überprüfen des Belüftungsgrades der Zigaretten (S + F, S′+ F) und eine Steuerung der Laserquelle zum Erzeugen des pulsierenden primären Laserstrahls (P) aufweist, <u>dadurch gekennzeichnet,</u> daß zum Ausgleich der Energieaufteilung des primären Laserstrahles (P) auf die beiden sekundären Laserstrahlen (R, R′), Einrichtungen vorgesehen sind zum Verändern des Reflexions-/Transmissionskoeffizienten von und durch den durchlässigen, reflektierenden Spiegel (1), wobei die Einrichtung gesteuert wird durch die Einrichtung zum Uberprüfen des Belüftungsgrades der Zigaretten (S + F, S′+ F).

7.  Vorrichtung nach Anspruch 6, dadurch gekennzeichnet, daß die Oberfläche des durchlässigen reflektierenden Spiegels (1) in zwei Bereiche aufgeteilt ist, welche unterschiedliche Reflexionskoeffizienten haben, wobei jeder Bereich der Oberfläche mit einer Schicht aus reflektierendem Material (101, 201 ) mit jeweils einem unterschiedlichen Reflexionskoeffizienten beschichtet ist.

8. Vorrichtung nach Anspruch 7, dadurch gekennzeichnet, daß die eine Schicht (101) und die andere Schicht (201) aus reflektierendem Material einen unterschiedlichen Reflexionskoeffizienten hat, der jeweils 40 % und 60 % des einfallenden Strahles beträft, wobei die beiden Schichten sich in etwa über die Hälfte der Oberfläche des durchlässigen, reflektierenden Spiegels (1) erstrecken und wobei die Linie, welche die beiden Schichten trennt, eine gerade Linie ist.

9. Vorrichtung nach Anspruch 8, dadurch gekennzeichnet, daß der pulsierende primäre Laserstrahl so gerichtet ist, daß er teilweise auf den einen reflektierenden Bereich (101) und teilweise auf den anderen reflektierenden Bereich (201 ) des durchlässigen, reflektierenden Spiegels (1) fällt und daß Einrichtungen vorgesehen sind, um den durchlässigen, reflektierenden Spiegel (1) quer zu der Trennlinie der beiden Schichten (101, 201), welche einen unterschiedlichen Reflexïonskoeffizienten haben, zu verschieben, und auch quer zu dem primären Laserstrahl (P), wobei die Einrichtungen von der Einrichtung zum Überprüfen des Belüftungsgrades der perforierten Zigaretten so gesteuert werden, daß der Teil des primären Laserstrahls (P), welcher auf den einen Bereich (101) des durchlässigen, reflektierenden Spiegels (1) fällt, relativ zu dem Teil des primären Laserstrahls (P) verändert wird, der auf den anderen Bereich (201) des Spiegels (1) fällt.

10. Vorrichtung nach Anspruch 9, dadurch gekennzeichnet, daß die Einrichtung zum Verschieben des durchlässigen, reflektierenden Spiegels aus einer Mikrometerverschiebeeinrichtung besteht.

11. Vorrichtung zum Durchführen des Verfahrens nach den Ansprachen 1, 4, 5 und 6, dadurch gekennzeichnet, daß, um zu bewirken, daß die beiden reflektierten sekundären Laserstrahlen (R, R′) unterschiedlich auf den jeweiligen Bereich des Abdeckbandes (3) konzentriert werden, wodurch Löcher unterschiedlichen Durchmesser in dem Abdeckband hergestellt werden, diese Vorrichtung mit Einrichtungen zum Verschieben der Linse (L1) zum Fokussieren eines (R) der reflektierten sekundären Laserstrahlen in beiden Richtungen (Pfeil B1) des Laserstrahles (R) versehen ist, so daß eine Veränderung des Durchmessers des Fokusfleckes erhalten wird, welcher von dem reflektierten sekundären Laserstrahl (R) auf der jeweiligen Fläche des Abdeckbandes (3) erzeugt wird, wobei die Einrichtungen zum Verschieben der Linse (L1) von der Einrichtung zum Uberprüfen des Belüftungsgrades der Zigaretten gesteuert werden.

12. Vorrichtung nach Anspruch 11, dadurch gekennzeichnet, daß jede Linse (L1, L2) zum Fokussieren jedes reflektierten sekundären Laserstrahls (R, R′) mit Einrichtungen zum Verschieben einer der Linsen unabhängig von der anderen Linse in beiden Richtungen (Pfeil B1 und Pfeil B2) der reflektierten Laserstrahlen (R, R′) versehen ist, welcher zu der jeweiligen Linse gehört, wobei die Einrichtungen zum Verschieben der Linsen unabhängig voneinander durch die Einrichtung zum Überprüfen des Belüftungsgrades der Zigaretten gesteuert werden.

13. Vorrichtung nach einem oder beiden der vorstehenden Ansprüche 11 und 12, dadurch gekennzeichnet, daß die Einrichtungen zum Verschieben der Linsen (L1, L2) Mikrometerverschiebeeinrichtungen sind.

14. Verfahren und Vorrichtung nach einem der vorstehenden Ansprüche, dadurch gekennzeichnet, daß das Verfahren und die Vorrichtung für das Perforieren beliebiger anderer Arten von stabähnlichen Gegenständen verwendet wird.

## Revendications

1. Procédé de perforation de cigarettes ou d'articles similaires ayant la forme de tiges, au moyen de rayons laser, dans lequel un ensemble filtre et cigarettes (S+2F+S′), constitué par un filtre de longueur double (2F) placé entre deux cigarettes de longueur normale (S, S′) et fixé à ces dernières par enveloppement et collage au moyen d'une bande de jonction et de recouvrement (3), comporte à chaque extrémité du filtre (2F) qui est associé à la cigarette respective (S, S′) au moins une rangée de trous (4, 5) qui est dirigée transversalement à l'axe de l'ensemble filtre et cigarettes (S+2F+S′) et qui est formée dans la bande de recouvrement (3) par l'action de perforation de deux rayons laser (R, R′) qui sont obtenus en divisant un seul rayon laser primaire pulsé (P) en deux rayons laser secondaires (R, T) de puissance égale, et en faisant tourner l'ensemble filtre et cigarettes (S+2F+S′) autour de son axe, des moyens étant prévus pour effectuer un contrôle final du degré de ventilation des cigarettes (S+F, S′+F) et pour agir sur la fréquence et la puissance du rayon laser primaire pulsé (P) en fonction de la différence de valeur mesurée entre le degré de ventilation moyen d'un nombre prédéterminé de cigarettes (S+F, S'+F), et une valeur de référence du degré de ventilation de cigarettes, caractérisé en ce que dans l'étape finale du contrôle du degré de ventilation des cigarettes (S+F, S'+F), le degré de ventilation moyen est mesuré sur un nombre donné de cigarettes (S+F) qui ont été perforées par l'un (R) des deux rayons laser secondaires, et le degré de ventilation moyen est mesuré pour les cigarettes (S'+F) qui ont été perforées simultanément vers l'autre rayon laser secondaire (R'), et un équilibrage de l'action de perforation des deux rayons laser secondaires (R, R') est effectué de façon à obtenir avec chaque rayon laser secondaire des aires globales identiques de trous de ventilation, soit conformément à la différence entre la valeur mesurée du degré de ventilation moyen des cigarettes (S+F) qui ont été perforées par l'un (R) des deux rayons laser secondaires, et la valeur mesurée du degré de ventilation moyen des cigarettes (S'+F) qui ont été perforées par l'autre rayon laser secondaire (R'), soit conformément à la différence entre une valeur de référence du degré de ventilation des cigarettes et la valeur mesurée du degré de ventilation moyen des cigarettes (S+F) qui ont été perforées par l'un (R) des deux rayons laser secondaires, et à la différence entre la valeur de référence précitée et la valeur mesurée du degré de ventilation moyen des cigarettes (S'+F) qui ont perforées par l'autre rayon laser secondaire (R').

2. Le procédé selon la revendication 1, caractérisé en ce que pour obtenir l'équilibrage de l'action de perforation par les rayons laser secondaires (R, R'), on équilibre le fractionnement de la puissance du rayon laser primaire pulsé (P) entre les deux rayons laser secondaires (R, R').

3. Le procédé selon la revendication 2, caractérisé en ce que le fractionnement de la puissance du rayon laser primaire (P) entre les deux rayons laser secondaires (R, T) qui sont obtenus par la division du rayon laser primaire (P) au moyen d'un miroir semi-réfléchissant (1), est équilibré en faisant varier le coefficient de réflexion du miroir semi-réfléchissant (1).

4. Le procédé selon la revendication 1, caractérisé en ce qu'on accomplit l'équilibrage de l'action de perforation par les deux rayons laser secondaires (R, R') en concentrant de façon différente les rayons laser secondaires (R, R') sur la surface respective de la bande de recouvrement (3), pour former ainsi des trous d'un diamètre différent.

5. Le procédé selon la revendication 4, caractérisé en ce qu'on fait varier la concentration des rayons laser secondaires (R, R') sur la zone respective de la bande de recouvrement (3) en déplaçant deux lentilles de focalisation (L1, L2) qui sont respectivement associées à l'un des deux rayons laser secondaires (R, R'), ou en déplaçant seulement l'une de ces deux lentilles, dans les deux sens (flèche B1 et flèche B2) correspondant à la direction du rayon laser secondaire respectif (R, R').

6. Un appareil pour la mise en oeuvre du procédé selon les revendications 1 à 3, et comprenant une source laser qui est destinée à générer un seul rayon laser primaire pulsé (P), un premier miroir semi-réfléchissant (1) destiné à diviser le rayon laser primaire (P) en deux rayons laser secondaires (R, T) de même puissance, c'est-à-dire en un rayon laser secondaire (T) qui traverse le premier miroir et en un rayon laser secondaire (R) qui est réfléchi vers l'une des extrémités du filtre (2F), qui est associée à une cigarette (S), un second miroir totalement réfléchissant (2) par lequel le rayon laser secondaire (T) qui traverse le premier miroir semi-réfléchissant (1) est dévié sous la forme d'un rayon laser secondaire réfléchi (R') en direction de l'extrémité du filtre (2F) qui est associée à la cigarette opposée (S'), une lentille de focalisation (L1, L2) pour chacun des rayons laser secondaires réfléchis (R, R'), ayant pour but de concentrer ces rayons sur la surface respective de la bande de recouvrement (3), un dispositif destiné à contrôler le degré de ventilation des cigarettes (S+F, S'+F), et à commander la source laser pour la génération du rayon laser primaire pulsé (P), caractérisé en ce que dans le but d'équilibrer le fractionnement de la puissance du rayon laser primaire (P) entre les deux rayons laser secondaires (R, R'), des moyens sont incorporés pour faire varier les coefficients de réflexion et de transmission par le miroir semi-réfléchissant (1), et ces moyens sont commandés par le dispositif destiné à contrôler le degré de ventilation des cigarettes (S+F, S'+F).

7. L'appareil selon la revendication 6, caractérisé en ce que la surface du miroir semi-réfléchissant (1) est divisée en deux zones ayant des coefficients de réflexion différents, chaque zone de cette surface étant recouverte par une couche de matériau réfléchissant (101, 201) ayant un coefficient de réflexion respectif différent.

8. L'appareil selon la revendication 7, caractérisé en ce qu'une première couche (101) et une seconde couche (201) de matériau réfléchissant ont des coefficients de réflexion qui s'élèvent respectivement à 40% et 60% du rayon incident, les deux couches s'étendent sur approximativement la moitié de la surface du miroir semi-réfléchissant (1), et la ligne qui sépare ces deux couches est une ligne droite.

9. L'appareil selon la revendication 6, caractérisé en ce que le rayon laser primaire pulsé est dirigé de façon à tomber en partie sur la première zone réfléchissante (101) et en partie sur la seconde zone réfléchissante (201) du miroir semi-réfléchissant (1), et en ce que des moyens sont'incorporés pour déplacer le miroir semi-réfléchissant (1) dans une direction transversale par rapport à la ligne qui sépare les deux couches (101, 201) ayant des coefficients de réflexion différents, et dans une direction transversale par rapport au rayon laser primaire (P), ces moyens étant commandés par le dispositif destiné à contrôler le degré de ventilation des cigarettes perforées, de façon que la fraction du rayon laser primaire (P) qui tombe sur la première zone (101) du miroir semi-réfléchissant (1) varie par rapport à la fraction du rayon laser primaire (P) qui tombe sur la seconde zone (201) de ce miroir (1).

10. L'appareil selon la revendication 9, caractérisé en ce que les moyens destinés à déplacer le miroir semi-réfléchissant consistent en moyens de déplacement micrométriques.

11. L'appareil destiné à mettre en oeuvre le procédé selon les revendications 1, 4, 5 et 6, caractérisé en ce que dans le but de concentrer différemment les deux rayons laser secondaires réfléchis (R, R') sur la zone respective de la bande de recouvrement (3), pour former ainsi des trous d'un diamètre différent dans cette bande de recouvrement, cet appareil comporte des moyens qui sont destinés à déplacer la lentille (L1) prévue pour la focalisation de l'un (R) des rayons laser secondaires réfléchis, le déplacement s'effectuant dans les deux sens (flèche B1) correspondant à la direction de ce rayon (R), de façon à obtenir une variation du diamètre de la trace focale que le rayon laser secondaire réfléchi (R) forme sur la zone respective de la bande de recouvrement (3), ces moyens de déplacement de la lentille (L1) étant commandés par le dispositif qui est destiné à contrôler le degré de ventilation des cigarettes.

12. L'appareil selon la revendication 11, caractérisé en ce que chaque lentille (L1, L2) prévue pour la focalisation de chaque rayon laser secondaire réfléchi (R, R') est équipée de moyens destinés à déplacer l'une des lentilles indépendamment de l'autre, dans les deux sens (flèche B1 et flèche B2) correspondant à la direction du rayon laser secondaire réfléchi (R, R') qui est associé à la lentille respective, les moyens destinés à déplacer les lentilles étant commandés de façon mutuellement indépendante par le dispositif qui est destiné à contrôler le degré de ventilation des cigarettes.

13. L'appareil selon l'une quelconque des revendications 11 et 12 précédentes, ou les deux, caractérisé en ce que les moyens destinés à déplacer les lentilles (L1, L2) sont des moyens de déplacement micrométriques.

14. Le procédé et l'appareil selon l'une quelconque des revendications précédentes, caractérisés en ce que l'on peut utiliser ce procédé et cet appareil pour perforer n'importe quel autre type d'articles ayant la forme de tiges.

Fig.1

Fig.2

EP 0 384 121 B1

Fig.3

Fig.4

13